# EUROPÄISCHE PATENTSCHRIFT

(11) **EP 3 991 550 B1**
(45) Veröffentlichungstag und Bekanntmachung des Hinweises auf die Patenterteilung: **07.06.2023**
(21) Anmeldenummer: 21199062.7
(22) Anmeldetag: 27.09.2021
(51) Int. Cl.: A01K 95/00

(54) **FISCHEREIGEWICHT UND VERFAHREN ZUR HERSTELLUNG EINES SOLCHEN**
FISHING WEIGHT AND METHOD FOR MANUFACTURING THE SAME
POIDS DE PÊCHE ET PROCÉDÉ DE FABRICATION D'UN TEL POIDS

(30) Priorität: 27.10.2020 DE 102020128228
(43) Veröffentlichungstag der Anmeldung: 04.05.2022
(73) Patentinhaber: family Gothe GmbH, 50935 Köln (DE)
(72) Erfinder: Hartwig, Ingmar, 40217 Düsseldorf (DE)
(74) Vertreter: Schober, Mirko

(56) Entgegenhaltungen:
- AU-A4- 2002 100 203
- FR-A- 1 054 574
- FR-A1- 2 876 869
- US-A- 5 784 825

## Beschreibung

Die Erfindung betrifft ein Fischereigewicht und ein Verfahren zu dessen Herstellung.

Fischereigewichte werden an der Angelschnur befestigt, um sicherzustellen, dass der Angelhaken in das Wasser eintauchen kann. Klassischerweise sind solche Gewichte daher aus einem schweren Material gefertigt, vor allem aus Blei. Unter Umwelt-, Gesundheits- und Nachhaltigkeitsgesichtspunkten ist Blei aber ein Material, welches giftig ist. Ein Verbleib im Wasser, wenn beispielsweise eine Angelschnur reißt, führt langfristig zu Kontaminierungen im Wasser und kann überdies in die Nahrungskette gelangen.

Es ist daher die Aufgabe der vorliegenden Erfindung, ein Fischereigewicht so zu konzipieren, dass die oben erwähnten Nachteile nicht aufweist.

Dokument US 5 784 825 A offenbart ein Fischereigewicht nach dem Oberbegriff des unabhängigen Anspruchs 1.

Gelöst wird diese Aufgabe durch ein Fischereigewicht mit den Merkmalen des Anspruchs 1 und ein Verfahren zur Herstellung eines Fischereigewichtes mit den Merkmalen des Anspruchs 3. Vorteilhafte Ausführungsformen finden sich in den jeweiligen Unteransprüchen.

Erfindungsgemäß besteht das Fischereigewicht aus einer Materialzusammensetzung, die Sand als Grundwerkstoff und Glutinleim als Bindemittel umfasst. Diese Materialzusammensetzung weist eine ganze Reihe von Vorteilen auf. Sie sorgt im ausgehärteten Zustand dafür, dass ein hinreichend schweres Fischereigewicht zur Verfügung gestellt wird, welches das Abtauchen eines Angelhakens sicherstellt. Weiter lässt sich die Materialzusammensetzung vor dem Aushärten in jede beliebige Form bringen, so dass Fischereigewichte mit ganz unterschiedlichen und dem Anwendungszweck angepassten Formen hergestellt werden können. Das Fischereigewicht kann beispielsweise eine Sargform, Birnen- oder Tropfenform aufweisen. Weiter kann auch eine auf Strömung optimierte Form vorgesehen sein, so dass das so geformte Fischereigewicht einen geringen Strömungswiderstand aufweist, so dass im Wasser keine zusätzlichen Verwirbelungen entstehen. Die erfindungsgemäße Materialzusammensetzung hat ferner die Eigenschaft, dass sich der verwendete Glutinleim bei längerem Kontakt mit Wasser auflöst. Der Glutinleim löst sich bei einer Wassertemperatur von ca. 20° C nach etwa 24 - 48 Stunden auf. Reißt ein Fischereigewicht ab und verbleibt im Wasser, so zersetzt es sich in die Bestandteile und der Sand bleibt am Gewässerboden zurück. Da sich das Fischereigewicht anders als bekannte Fischereigewichte auflöst, bleiben bei Verlust des Gewichtes im Gewässer keine Scherben oder Bestandteile zurück, die zur Verletzungsgefahr etwas bei anderen Tieren oder badenden Personen führen können.

Bei Ausbildung des Fischereigewichtes in einer strömungsoptimierten Form mit geringerem Strömungswiderstand wird auch dafür gesorgt, dass eine vorzeitige Zersetzung noch beim Angeln durch stark erodierende Strömungen vermieden werden kann.

Zudem wird mit dem erfindungsgemäßen Bindemittel noch etwas anderes erreicht. Wenn das Fischereigewicht ins Wasser eintaucht, wird die Oberfläche des Fischereigewichtes angelöst. Dabei setzen sich Aromen des Glutin frei, welche für unterschiedlichste Fischarten als Lockstoff dienen. Hierdurch kann übermäßiges Anfüttern sowie der Einsatz von weiteren Lockstoffen verringert oder ganz vermieden werden, da das Fischereigewicht bereits als Köder wirkt.

Das äußere Erscheinungsbild des Fischereigewichtes aus Sand und Glutinleim fügt sich unscheinbar in seine Umgebung des Einsatzortes ein. Hierdurch ergibt sich eine natürliche Tarnung, ohne dass weitere Stoffe zur Oberflächenveredelung oder -einfärbung erforderlich sind.

Erfindungsgemäß kann das oben beschriebene Fischereigewicht unter Durchführung eines Verfahrens hergestellt werden, welches folgende Schritte umfasst:
a. Es wird Glutinleim bereitgestellt;
b. der Glutinleim wird mit Sand vermischt, um eine Sand-/ Glutinleimmischung zu erhalten;
c. die Sand-/Glutinleimmischung wird in eine Form eingefüllt;
d. anschließend wird die Mischung in der Form ausgehärtet, was insbesondere durch Abkühlen geschehen kann.

Wie oben anhand der Form der Fischereigewichte beschrieben, kann die im Verfahren eingesetzte Gießform unterschiedliche Formgebungen aufweisen, je nachdem, welche Form von Fischereigewicht hergestellt werden soll.

Im Prinzip kann das Fischereigewicht nun verwendet werden. Bevorzugt ist jedoch vorgesehen, dass die ausgehärtete Mischung eine vorgegebene Zeitdauer getrocknet, insbesondere trocken gelagert wird. Auf diese Weise wird Restfeuchtigkeit, die zum Anlösen des Glutinleims führen kann, beseitigt. Das Trocknen kann in der Form selbst durchgeführt werden, indem die abgekühlte Mischung in der Form noch für einige Zeit belassen wird, genauso kann vorgesehen sein, dass nach dem Abkühlen/Aushärten die ausgehärtete Mischung aus der Form entnommen und an einem anderen Ort getrocknet wird. Die Zeitdauer des Trocknens beträgt bevorzugt mehrere Tage, äußerst bevorzugt insbesondere eine Woche.

Erfindungsgemäß wird Sand mit einer mittleren Korngröße von 0,5 mm bis 2 mm verwendet. Der Sand mit dieser Verteilung der Korngröße wird bevorzugt durch Sieben erhalten. Insbesondere Sand mit Korngrößen kleiner als 2 mm liefert besonders gute Ergebnisse.

Dabei kommt es allerdings auch auf die Mischverhältnisse an. Bezogen auf die Gewichtsanteile von Sand und Glutinleim in der Sand/Glutinleimmischung liegt das Mischverhältnis von Sand zu Glutinleim erfindungsgemäß zwischen 4:1 und 2:1, bevorzugt bei 3:1.

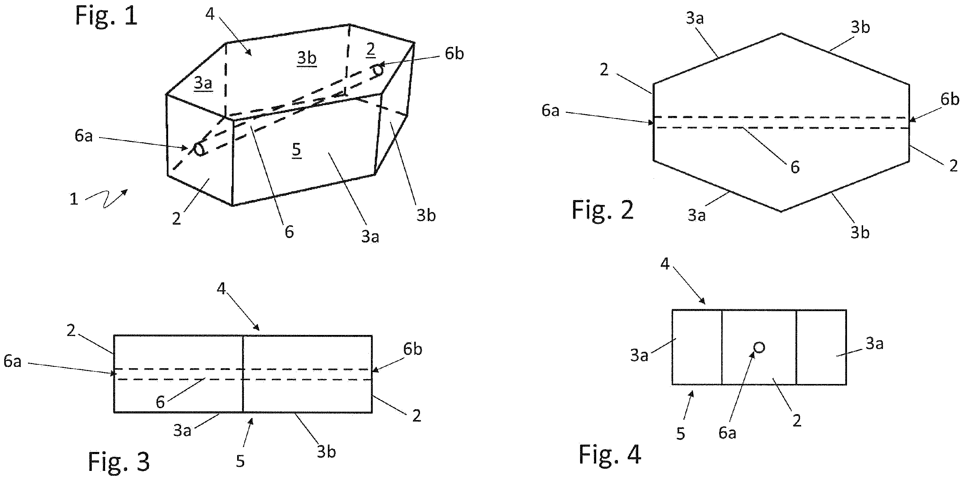

Die Erfindung wird nachfolgend anhand eines Ausführungsbeispiels, welches in den Figuren 1 - 4 gezeigt ist, näher erläutert.
- Figur 1 -: zeigt eine schematische Ansicht eines möglichen erfindungsgemäßen Fischereigewichts in perspektivische Darstellung,
- Figur 2 -: zeigt eine Draufsicht auf das in Figur 1 dargestellte Fischereigewicht,
- Figur 3 -: zeigt eine Längsseitenansicht des in Figur 1 dargestellten Fischereigewichts,
- Figur 4 -: zeigt eine Stirn Seitenansicht des in Figur 1 dargestellten Fischereigewichts.

Das in den Figuren dargestellte Fischereigewicht 1 ist exemplarisch als Sargform dargestellt und weiß eine Oberseite 4, eine Unterseite 5 sowie Stirnseiten 2 und Längsseiten mit zueinander abgewinkelten Abschnitten 3a und 3b auf. Zur Durchführung einer Angelschnur ist ein Durchgangsloch 6 vorgesehen, welches in den Stirnseiten 2 Eintritts- bzw. Austrittsöffnungen 6a bzw. 6b aufweist. Solche Durchgangslöcher 6, die nicht zwingend zwischen den hier dargestellten Stirnseiten 2 verlaufen müssen, sondern deren Eintrittsöffnungen bzw. Austrittsöffnungen auch an anderen Seiten des Fischereigewichts 1 angeordnet sein können, lassen sich einerseits durch Anbringen einer Bohrung in dem bereits fertig ausgewerteten Fischereigewicht 1 herstellen; bevorzugt werden diese jedoch bereits beim Formprozess in der Form durch Einlegen oder Verwenden geeigneter stabförmiger oder anders geformter Negativformelemente in der Gießform erzeugt, indem sich die Mischung aus Sand und Glutinleim um ein solches Negativformelement herum verteilt.

Nach dem Ausformen müssen solche Negativformelemente dann lediglich aus der so hergestellten Bohrung 6 entfernt werden.

## Patentansprüche

1. Fischereigewicht (1), bestehend aus einer Materialzusammensetzung, die Sand als Grundwerkstoff und Glutinleim als Bindemittel umfasst, **dadurch gekennzeichnet, dass** der Sand mit einer mittleren Korngröße von 0,5 mm bis 2 mm verwendet wird und dass bezogen auf die Gewichtsanteile von Sand und Glutinleim in der Sand/Glutinleimmischung das Mischverhältnis von Sand zu Glutinleim zwischen 4:1 und 2:1, bevorzugt bei 3:1 liegt.

2. Fischereigewicht (1) nach Anspruch 1,
**dadurch gekennzeichnet,**
**dass** es Sargform, Birnen- oder Tropfenform aufweist.

3. Verfahren zur Herstellung eines Fischereigewichtes (1) nach einem der vorigen Ansprüche, aufweisend folgende Schritte:
a. Bereitstellen eines Glutinleims;
b. Vermengen des Glutinleims mit Sand, um eine Sand-/ Glutinleimmischung zu erhalten;
c. Einfüllen der Sand/Glutinleimmischung in eine Form;
d. Aushärtenlassen, insbesondere Abkühlenlassen, der Mischung in der Form.

4. Verfahren nach Anspruch 3,
**dadurch gekennzeichnet,**
**dass** die ausgehärtete Mischung aus der Form entnommen wird.

5. Verfahren nach Anspruch 3 oder 4,
**dadurch gekennzeichnet,**
**dass** die ausgehärtete Mischung für eine vorgegebene Zeitdauer getrocknet, insbesondere trocken gelagert wird.

6. Verfahren nach Anspruch 5,
**dadurch gekennzeichnet,**
**dass** die Zeitdauer mehrere Tage, insbesondere eine Woche, beträgt.

## Claims

1. Fishing weight (1) comprising a material composition containing sand as the basic material and animal glue as the binding agent,
**characterised in that**
the sand used has an average particle size of 0.5 mm to 2 mm and that in relation to the parts by weight of sand and animal glue in the sand/animal glue mixture the mixing ratio of sand to animal glue is between 4:1 and 2:1, preferably at 3:1.

2. Fishing weight (1) according to claim 1
**characterised in that**
it has a coffin shape, pear shape or drop shape.

3. Method for manufacturing a fishing weight (1) according to one of the preceding claims,
comprising the following steps:
a. preparing an animal glue;
b. mixing the animal glue with sand in order to obtain a sand/animal glue mixture;
c. filling a mould with the sand/animal glue mixture;
d. leaving the mixture to harden, in particular cool down, in the mould.

4. Method according to claim 3
**characterised in that**
the hardened mixture is removed from the mould.

5. Method according to claim 3 or 4
**characterised in that**
the hardened mixture is dried, in particular is stored dry, for a predetermined length of time.

6. Method according to claim 5
**characterised in that**
the length of time amounts to several days, in particular to a week.

## Revendications

1. Poids de pêche (1) comportant une composition des matériaux comprenant du sable en tant que matériau de base et de la colle animale en tant que liant,
**caractérisé en ce que**
le sable est utilisé avec une granulométrie moyenne de 0,5 mm à 2 mm, et que, relatif aux pourcentages en poids de sable et de la colle animale dans le mélange de sable et de colle animale, le rapport de mélange de sable et de colle animale est entre 4:1 et 2:1, de préférence 3:1.

2. Poids de pêche (1) selon la revendication 1,
**caractérisé en ce**
**qu'**il est en forme de cercueil, en forme de poire ou en forme de goutte.

3. Procédé de fabrication d'un poids de pêche (1) selon l'une quelconque des revendications précédentes comportant les étapes suivantes:
a. fournir une colle animale;
b. mélanger la colle animale avec le sable pour recevoir un mélange de sable et de colle animale;
c. verser le mélange de sable et de colle animale dans un moule;
d. laisser durcir, surtout laisser refroidir, le mélange dans le moule.

4. Procédé selon la revendication 3,
**caractérisé en ce**
**que** le mélange durci est prélevé du moule.

5. Procédé selon la revendication 3 ou 4,
**caractérisé en ce**
**que** le mélange durci est séché, surtout est stocké au sec, pour une durée de temps prédéfinie.

6. Procédé selon la revendication 5,
**caractérisé en ce**
**que** la durée de temps est de plusieurs jours, surtout une semaine.
